(19) Europäisches Patentamt
European Patent Office
Office européen des brevets

(11) **EP 4 229 382 B1**

(12) **FASCICULE DE BREVET EUROPEEN**

(45) Date de publication et mention de la délivrance du brevet:
**17.09.2025 Bulletin 2025/38**

(21) Numéro de dépôt: **21791306.0**

(22) Date de dépôt: **11.10.2021**

(51) Classification Internationale des Brevets (IPC):
**G01M 3/00** *(2006.01)* **F17C 13/00** *(2006.01)*

(52) Classification Coopérative des Brevets (CPC):
**G01M 3/002; F17C 13/004;** F17C 2201/0157;
F17C 2201/052; F17C 2203/0358; F17C 2203/0379;
F17C 2203/0391; F17C 2221/033; F17C 2223/0161;
F17C 2223/033; F17C 2250/0439; F17C 2250/0626;
F17C 2260/038; F17C 2270/0107

(86) Numéro de dépôt international:
**PCT/EP2021/078035**

(87) Numéro de publication internationale:
**WO 2022/078950 (21.04.2022 Gazette 2022/16)**

(54) **PROCÉDÉ DE CONTRÔLE DE L'ÉTANCHÉITÉ D'UNE CUVE ÉTANCHE ET THERMIQUEMENT ISOLANTE DE STOCKAGE D'UN FLUIDE**

VERFAHREN ZUR DICHTHEITSPRÜFUNG EINES VERSIEGELTEN UND WÄRMEISOLIERENDEN TANKS ZUR LAGERUNG EINES FLUIDS

METHOD FOR LEAK TESTING A SEALED AND THERMALLY INSULATING TANK FOR STORING A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2020 FR 2010578**

(43) Date de publication de la demande:
**23.08.2023 Bulletin 2023/34**

(73) Titulaire: **GAZTRANSPORT ET TECHNIGAZ 78470 Saint-Rémy-lès-Chevreuse (FR)**

(72) Inventeurs:
• **CHAMPAGNAC, Maxime 78470 SAINT-REMY-LES-CHEVREUSE (FR)**
• **JOLIVET, Pierre 78470 SAINT-REMY-LES-CHEVREUSE (FR)**
• **BLEOMELEN, Mael 78470 SAINT-REMY-LES-CHEVREUSE (FR)**

(74) Mandataire: **Loyer & Abello 9, rue Anatole de la Forge 75017 Paris (FR)**

(56) Documents cités:
EP-A1- 0 053 546    WO-A1-2020/128370
WO-A2-02/40319    US-A1- 2004 003 653

EP 4 229 382 B1

**Description**

L'invention appartient au domaine des cuves étanches et thermiquement isolantes, à membranes. En particulier, l'invention se rapporte au domaine des cuves étanches et thermiquement isolantes pour le stockage et/ou le transport de liquide à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) à environ -162°C à pression atmosphérique. Ces cuves peuvent être installées à terre ou sur un ouvrage flottant. Dans le cas d'un ouvrage flottant, la cuve peut être destinée au transport de gaz liquéfié à basse température ou à recevoir du gaz liquéfié à basse température servant de carburant pour la propulsion de l'ouvrage flottant. Plus particulièrement l'invention se rapporte à des dispositifs et procédés pour détecter des fuites dans une membrane secondaire d'une telle cuve.

Les cuves des navires pour le transport de gaz naturel liquéfié comprennent généralement une structure porteuse qui apporte la rigidité mécanique, une membrane d'étanchéité primaire destinée à être en contact avec le produit contenu dans la cuve, et une membrane d'étanchéité secondaire agencée entre la membrane d'étanchéité primaire et la structure porteuse. La membrane d'étanchéité secondaire est destinée à retenir le produit en cas de fuite dans la membrane d'étanchéité primaire. L'espace entre la membrane d'étanchéité primaire et la membrane secondaire est appelé espace primaire et l'espace entre la membrane d'étanchéité secondaire et la structure porteuse est appelé espace secondaire.

La membrane d'étanchéité secondaire est invisible et inaccessible une fois la cuve fabriquée. Ainsi il est impossible d'observer directement d'éventuels défauts de cette membrane tels qu'une rayure, une dislocation locale de la membrane ou encore un canal d'air entre deux pièces composant la membrane.

Pour diagnostiquer l'étanchéité de la membrane secondaire, on connaît en particulier le document WO2020128370, déposé au nom de la demanderesse, qui décrit un procédé de contrôle de l'étanchéité de cette membrane secondaire. Dans ce procédé, on détecte la présence de fuites au niveau de la membrane secondaire d'étanchéité en particulier en imposant une surpression en gaz inerte dans l'espace primaire d'isolation par rapport à l'espace d'isolation secondaire.

Le gaz inerte utilisé dans un tel procédé est classiquement du diazote. Or, ce gaz est stocké sur le navire en quantité limité et à de multiples applications sur le navire, dès qu'une circulation de gaz inerte est nécessaire.

Or, la demanderesse a constaté que dans les cas où les fuites de la membrane secondaire d'étanchéité sont importantes, la quantité de gaz inerte nécessaire à l'opération de détection des fuites est très importante, jusqu'à épuiser la totalité du stock en gaz inerte du navire au cours de l'opération de contrôle de l'étanchéité de la cuve. En effet, le gaz inerte, une fois utilisé pour chaque opération de contrôle, est relargué dans l'air environnant.

A l'heure actuelle, il n'existe aucun procédé de test de l'étanchéité de la membrane secondaire d'étanchéité dans lequel on réduit la quantité en gaz inerte utilisée, voire dans lequel on réalise une inspection de l'étanchéité avec un bilan neutre concernant le gaz inerte.

Une idée à la base de l'invention est de fournir des dispositif et procédé pour détecter des fuites dans une cuve étanche et thermiquement isolante remplie de liquide à basse température ne présentant pas ces inconvénients. Ainsi un but de l'invention est de pouvoir localiser les porosités anormales de la membrane étanche secondaire, même lorsque le débit de fuite est très élevé.

Ainsi, la présente invention concerne un procédé de contrôle de l'étanchéité d'une cuve étanche et thermiquement isolante de stockage d'un gaz liquéfié à basse température, la cuve étant à basse température, la cuve comportant une structure porteuse présentant une coque interne et une coque externe, un espace confiné entre la coque interne et la coque externe, une membrane d'étanchéité primaire destinée à être en contact avec le gaz liquéfié à basse température contenu dans la cuve, et une membrane d'étanchéité secondaire agencée entre la membrane d'étanchéité primaire et la coque interne, un espace primaire entre la membrane d'étanchéité primaire et la membrane d'étanchéité secondaire et un espace secondaire entre la membrane d'étanchéité secondaire et la coque interne, l'espace primaire et l'espace secondaire comprenant des matériaux isolants, l'espace primaire comprenant au moins une entrée primaire de gaz et l'espace secondaire comprenant au moins une sortie secondaire de gaz, ladite membrane d'étanchéité primaire reposant directement sur les matériaux isolants contenus dans l'espace primaire et ladite membrane d'étanchéité secondaire reposant directement sur les matériaux isolants contenus dans l'espace secondaire, le procédé comprenant les étapes successives suivantes pour détecter la localisation d'un défaut d'étanchéité de la membrane d'étanchéité secondaire sous la forme d'un point froid sur la surface extérieure de la coque interne :

- une étape dite principale dans laquelle l'espace secondaire est mis à une pression inférieure à la pression de l'espace primaire, avec un différentiel de pression P1, par injection d'un gaz inerte dans l'espace primaire par l'intermédiaire de l'entrée primaire de gaz et en créant un échappement ou une aspiration au niveau de la sortie secondaire de gaz de l'espace secondaire, puis en mesurant la température d'une surface extérieure de la coque interne depuis l'espace confiné situé autour de la coque interne ;
- une étape dite ultérieure dans laquelle on mesure la température de la surface extérieure de la coque interne depuis l'espace confiné dans les conditions normales de fonctionnement de la cuve.

L'invention se caractérise en ce qu'au moins une partie du gaz inerte injecté dans l'espace primaire est récupéré par l'intermédiaire d'au moins une sortie secondaire de l'espace secondaire pour être réinjecté dans l'espace primaire.

Ainsi, la demanderesse propose un système simple, efficace et peu couteux pour effectuer un test d'étanchéité de la membrane secondaire d'une cuve pour gaz liquéfié, sans perte de gaz inerte ou en perdant une quantité réduite de ce dernier de sorte que le procédé de contrôle puisse toujours être mise en œuvre, quelle que soient les conditions d'étanchéité de la membrane d'étanchéité secondaire.

En effet, après plusieurs essais, la demanderesse a cherché une architecture à la fois simple, robuste et efficiente, pour faire recirculer le gaz inerte utilisé lors de la mise en œuvre du procédé selon l'invention.

On entend par « gaz liquéfié à basse température » tout corps qui est à l'état de vapeur dans les conditions normales de pression et de température et qui a été placé dans l'état liquide par abaissement de sa température.

On entend par « espace confiné » les ballasts, les quilles tubulaires, les batardeaux ou les cofferdams, les coursives et le pont de fermeture de la cuve aussi appelé « trunk deck ».

On entend par l'expression « cuve à basse température » une cuve dans laquelle le gaz liquéfié à basse température occupe au moins 20% du volume de la cuve, de préférence 70% ou une cuve ne contenant pas de chargement de gaz liquéfié, soit un volume inférieur à 20% du volume de la cuve, mais alors, dans ce cas, la cuve est refroidie à l'aide d'une pulvérisation (« spraying »), ou projection, d'un gaz liquéfié à basse température, tel que par exemple de l'azote liquide ou du GNL.

On entend par l'expression « conditions normales de fonctionnement de la cuve » les conditions dans lesquelles la cuve est utilisée normalement. Dans cet état, la pression de l'espace primaire est classiquement légèrement inférieure à celle de l'espace secondaire, par exemple de quelques mbar (millibars), soit de 2 à 7 mbar, ou encore, dans des cas plus rares, la pression de l'espace primaire peut être supérieure à la pression de l'espace secondaire, par exemple de 0 à 4 mbar.

Dans la suite, la présente invention est illustrée, sans limitation à ce mode d'exécution, avec un navire de stockage et de transport de gaz liquéfié du type LNGC (« Liquefied Natural Gas Carrier ») qui comprend classiquement quatre cuves étanche et thermiquement isolante de stockage d'un gaz liquéfié.

D'autres caractéristiques avantageuses de l'invention sont présentées succinctement ci-dessous :

Selon un mode d'exécution, la totalité du gaz inerte injecté dans l'espace primaire est réinjecté dans ce dernier, après sa récupération par l'intermédiaire d'au moins un moyen d'aspiration relié à une sortie secondaire de l'espace secondaire.

Selon un autre mode d'exécution, seulement une partie du gaz inerte injecté dans l'espace primaire, avantageusement représentant entre 20% et 80% du gaz inerte injecté dans l'espace primaire, est réinjecté dans ce dernier, après sa récupération par l'intermédiaire d'au moins un moyen d'aspiration relié à une sortie secondaire de l'espace secondaire.

Avantageusement, le procédé selon l'invention comprend une étape dite préliminaire dans laquelle on mesure la température de la surface extérieure de la coque interne depuis l'espace confiné dans les conditions normales de fonctionnement de la cuve.

Avantageusement, le différentiel de pression P1 est compris :

- entre 500 Pa et 1500 Pa, de préférence compris entre 800 Pa et 1200 Pa, pendant une durée d'au moins 10 heures, préférentiellement au moins 12 heures, ou
- entre 1800 Pa et 3200 Pa, de préférence compris entre 2100 Pa et 2900 Pa.

Avantageusement, l'étape dite principale est précédé d'une étape dite intermédiaire dans laquelle l'espace secondaire est mis à une pression inférieure à la pression de l'espace primaire, avec un différentiel de pression compris entre 500 Pa et 1500 Pa, de préférence entre 800 Pa et 1200 Pa, par injection d'un gaz inerte dans l'espace primaire par l'intermédiaire de l'entrée primaire de gaz et en créant un échappement ou une aspiration au niveau de la sortie secondaire de gaz de l'espace secondaire, puis en mesurant la température d'une surface extérieure de la coque interne depuis l'espace confiné situé autour de la coque interne.

De préférence, le gaz inerte consiste en du diazote.

Avantageusement, la durée de chaque mesure de température est d'au plus cinq heures, préférentiellement en au plus trois heures. Cette durée est classiquement prévue pour éviter un refroidissement trop important de la coque interne en dessous des températures tolérées par le matériau composant la coque interne.

De préférence, P1, avantageusement le différentiel de pression de l'étape dite intermédiaire, est maintenue stable pendant la mesure de la température. Ainsi, les pressions P1 et celle de l'étape dite intermédiaire sont idéalement maintenues dans une valeur de +/- 5% dans les domaines de pressions respectifs définis.

Le procédé selon l'invention peut comprendre en outre une étape de stabilisation des pressions dans l'espace primaire et l'espace secondaire, une étape de mesure du débit de gaz inerte injecté dans l'espace primaire, une étape de mesure de débit de gaz inerte sortant de l'espace secondaire, et une étape de comparaison du débit de gaz inerte injecté dans l'espace primaire avec le débit de gaz inerte sortant de l'espace secondaire de manière à identifier et quantifier le débit de gaz inerte passant à travers la membrane et déterminer ainsi une éventuelle porosité de la membrane secondaire.

Dans un navire, la cuve, par exemple sur sa paroi supérieure, présente des structures appelées dôme vapeur et dôme liquide. Elles peuvent prendre la forme de deux tourelles destinées à faire passer des équipements de manutention de cargaison pour manutentionner une phase liquide et une phase vapeur du gaz liquéfié à basse température contenu dans la cuve. En raison de cette géométrie, des méthodes de détection de fuites basées sur l'observation de zones anormalement chaudes ou anormalement froides peuvent être mises en échec, notamment à cause de l'influence des conditions climatiques extérieures et parce que les champs de température dans et au voisinage de ces tourelles peuvent être très complexes. En effectuant une surveillance des débits de gaz inerte entrant dans l'espace primaire et sortant de l'espace secondaire par ajouts de débitmètres au niveau de l'entrée primaire de gaz et de la sortie secondaire de gaz et une comparaison des valeurs de ces débits, il est alors possible de détecter s'il y a effectivement une fuite dans la cuve.

Selon un mode de réalisation, les étapes précédentes peuvent être effectuées après les étapes principales. Cela permet de localiser une éventuelle fuite du dôme de gaz et du dôme liquide lorsqu'aucune fuite n'a été détectée partout ailleurs par les mesures de température.

Selon un mode de réalisation, les étapes de mesure de débits sont effectuées simultanément à l'étape principale incluant l'étape intermédiaire, le cas échéant. Cela permet de raccourcir la durée totale du procédé de détection de fuite et de réduire la consommation de gaz inerte pendant toute la durée du procédé.

Selon un mode de réalisation, la mesure du débit de gaz inerte injecté dans l'espace primaire est effectuée à l'entrée primaire de gaz par un débitmètre.

Selon un mode de réalisation, la mesure du débit de gaz inerte sortant de l'espace secondaire est effectué à la sortie secondaire de gaz par un débitmètre.

Selon un mode de réalisation, seules l'entrée primaire de gaz et la sortie secondaire de gaz sont ouvertes, les autres entrées de gaz et les autres sorties de gaz étant fermées.

Selon un mode de réalisation, l'entrée primaire de gaz est située sur le dôme liquide.

Selon un mode de réalisation, la sortie secondaire de gaz est située sur le dôme gaz.

Cela permet d'utiliser pour ces procédés de détection de fuites des lignes d'inertage également présentes dans les dômes pour inerter les espaces primaire et secondaire.

Selon un mode de réalisation, le gaz inerte est choisi parmi l'hélium, l'argon et leur mélange, avec ou sans diazote présent dans le mélange.

Selon un mode de réalisation, le gaz liquéfié à basse température est choisi parmi le Gaz Naturel Liquéfié (GNL), le Gaz de Pétrole Liquéfié (GPL), l'éthane liquide, le propane liquide, l'azote liquide, le dioxygène liquide, l'argon liquide, le xénon liquide, le néon liquide et l'hydrogène liquide.

Un tel procédé peut être utilisé dans une structure flottante, côtière ou en eau profonde, notamment un navire méthanier, une unité flottante de stockage et regazéi-fication (FSRU), une unité flottante de production et de stockage déporté (FPSO) et autres. Une telle installation de stockage peut aussi servir de réservoir de carburant dans tout type de navire.

La présente invention concerne également une installation de stockage ou terrestre d'un gaz liquéfié à basse température pour la mise en œuvre du procédé de contrôle de l'étanchéité d'une cuve étanche et thermiquement isolante tel qu'énoncé succinctement ci-dessus, comportant :

- une cuve à basse température comportant une structure porteuse présentant une coque interne et une coque externe, l'espace entre la coque interne et la coque externe étant appelé espace confiné, une membrane d'étanchéité primaire destinée à être en contact avec le gaz liquéfié à basse température contenu dans la cuve, et une membrane d'étanchéité secondaire agencée entre la membrane d'étanchéité primaire et la coque interne, l'espace entre la membrane d'étanchéité primaire et la membrane d'étanchéité secondaire est appelé espace primaire et l'espace entre la membrane d'étanchéité secondaire et la coque interne est appelé espace secondaire, l'espace primaire et l'espace secondaire comprenant des matériaux isolants, l'espace primaire comprenant au moins une entrée primaire de gaz, l'espace secondaire comprenant au moins une sortie secondaire de gaz, ladite membrane d'étanchéité primaire reposant directement sur les matériaux isolants contenus dans l'espace primaire et ladite membrane d'étanchéité secondaire reposant directement sur les matériaux isolants contenus dans l'espace secondaire,
- un réservoir de gaz inerte agencé de manière à injecter du gaz inerte dans l'espace primaire par l'intermédiaire de l'entrée primaire de gaz,
- un dispositif d'injection apte à injecter du gaz inerte du réservoir de gaz inerte par l'entrée primaire de gaz, et ainsi à mettre sous pression l'espace primaire par rapport à l'espace secondaire,
- un dispositif d'aspiration connecté à la sortie secondaire de gaz pour créer une pression dans l'espace secondaire inférieure à la pression dans l'espace primaire,

- un dispositif de mesure de température de la surface extérieure de la coque interne,
- un système d'affichage des mesures de température afin de localiser un défaut d'étanchéité de la membrane d'étanchéité secondaire sous la forme d'un point froid sur la surface extérieure de la coque interne.

L'invention se caractérise en ce que le dispositif d'aspiration comprend au moins un moyen d'aspiration, consistant en une pompe, aspirant au moins en partie le gaz inerte dans l'espace secondaire pour le réinjecter dans l'espace primaire, de préférence par l'intermédiaire du susdit dispositif d'injection.

Selon un mode de réalisation de l'invention, le susdit moyen d'aspiration forme le seul moyen d'aspiration dudit dispositif de sorte que la totalité du gaz inerte récupéré dans l'espace secondaire est réinjecté dans l'espace primaire.

Selon un autre mode de réalisation de l'invention, le dispositif d'aspiration comprend également au moins un système d'aspiration récupérant le gaz inerte ne le réinjectant pas dans l'espace primaire.

Très avantageusement, le système d'aspiration est un système d'aspiration par effet Venturi comprenant une conduite principale présentant une entrée apte à être reliée à une source de gaz sous pression et une sortie vers l'extérieur de la cuve, une conduite d'aspiration présentant un côté amont apte à être relié au port de sortie de l'espace secondaire et un côté aval débouchant latéralement dans un convergent-divergent de la conduite principale de manière à ce qu'un flux de gaz dans la conduite principale produise une dépression dans la conduite d'aspiration.

Bien entendu, le système d'aspiration peut également consister en une pompe classique, autrement dit qui n'est pas à effet Venturi, qui fonctionne avec une source d'alimentation électrique. On peut également prévoir que le système d'aspiration comporte une ou plusieurs pompes dites classiques et une ou plusieurs pompes à effet Venturi, ces différentes pompes étant susceptibles d'être mises en œuvre ensemble ou non en fonction du choix des opérateurs réalisant les opérations au regard des conditions d'environnement et/ou d'autres facteurs.

Avantageusement, la source de gaz sous pression est un circuit d'air comprimé. Une telle source est classiquement présente dans un navire transportant des hydrocarbures ou plus généralement des matières inflammables ou explosives.

De préférence, le dispositif d'injection comprend un compresseur apte à injecter le gaz inerte provenant du réservoir de gaz inerte à une pression comprise entre 3 et 8 bars.

Selon un mode de réalisation, l'épaisseur de la membrane d'étanchéité primaire est inférieure ou égale à 2,5 mm (millimètre), par exemple ladite épaisseur est inférieure ou égale à 1,5 mm.

Selon un mode de réalisation, l'épaisseur de la membrane d'étanchéité secondaire est inférieure ou égale à 1,5 mm (millimètre), par exemple ladite épaisseur est inférieure ou égale à 1,2 mm.

Selon un mode de réalisation, le dispositif d'aspiration comprend un système d'aspiration par effet Venturi comprenant une conduite principale présentant une entrée apte à être reliée à une source de gaz sous pression et une sortie vers l'extérieur de la cuve, une conduite d'aspiration présentant un côté amont apte à être relié au port de sortie de l'espace secondaire et un côté aval débouchant latéralement dans un convergent-divergent de la conduite principale de manière à ce qu'un flux de gaz dans la conduite principale produise une dépression dans la conduite d'aspiration.

Selon un mode de réalisation, le dispositif d'aspiration comprend une pluralité de systèmes d'aspiration par effet Venturi, ces systèmes étant de préférence disposés en série afin d'accroître la capacité d'aspiration.

Selon un mode de réalisation, les systèmes d'aspiration par effet Venturi sont disposés en étage.

Selon un mode de réalisation, le dispositif de mesure de température est un photodétecteur.

Selon un mode de réalisation, le photodétecteur est une caméra avec un capteur infrarouge.

Selon un mode de réalisation, le capteur infrarouge est refroidi par des techniques de cryogénie, en particulier en utilisant la technologie à effet Peltier. Néanmoins, on peut envisager d'autres techniques dans lesquelles par exemple le capteur est enfermé dans une enceinte ou enfermé dans un vase Dewar, ou refroidi par un dispositif à effet Stirling. Cet abaissement de la température du capteur permet réduire le bruit thermique.

Selon un mode de réalisation, l'invention fournit un navire pour le transport d'un gaz liquéfié à basse température, comportant une installation de stockage flottante précitée.

Selon un mode de réalisation, l'invention fournit aussi un procédé de chargement ou déchargement d'un tel navire, dans lequel on achemine un gaz liquéfié à basse température à travers des canalisations isolées depuis ou vers une installation de stockage flottante ou terrestre vers ou depuis la cuve du navire.

Selon un mode de réalisation, l'invention fournit aussi un système de transfert pour un gaz liquéfié à basse température, le système comportant le navire précité, des canalisations isolées agencées de manière à relier la cuve installée dans la coque du navire à une installation de stockage flottante ou terrestre et une pompe pour entrainer un flux de gaz liquéfié à basse température à travers les canalisations isolées depuis ou vers l'installation de stockage flottante ou terrestre vers ou depuis l'installation de stockage du navire.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[Fig.1] La [Fig.1] est une représentation schématique écorchée d'une cuve de navire.

[Fig.2] La [Fig.2] est un schéma fonctionnel d'une cuve de navire vue en coupe selon un axe longitudinal du navire.

[Fig.3] La [Fig.3] est un schéma du principe du procédé de l'invention.

[Fig.4] La [Fig.4] est une représentation schématique d'un premier mode d'exécution du circuit de circulation de diazote selon l'invention dans une installation de stockage.

[Fig.5] La [Fig.5] est une représentation schématique d'un second mode d'exécution du circuit de circulation de diazote selon l'invention dans une installation de stockage.

[Fig.6] La [Fig.6] est une représentation schématique d'un troisième mode d'exécution du circuit de circulation de diazote selon l'invention dans une installation de stockage.

[Fig.7] La [Fig.7] est une représentation schématique de la disposition du système d'aspiration à effet Venturi par rapport à l'espace secondaire.

[Fig.8] La [Fig.8] une représentation agrandie en coupe de la zone IV de la [Fig.7].

[Fig.9] La [Fig.9] est une représentation schématique écorchée d'une installation de stockage d'un gaz liquéfié à basse température de navire méthanier et d'un terminal de chargement/déchargement d'une cuve de l'installation de stockage d'un gaz liquéfié à basse température.

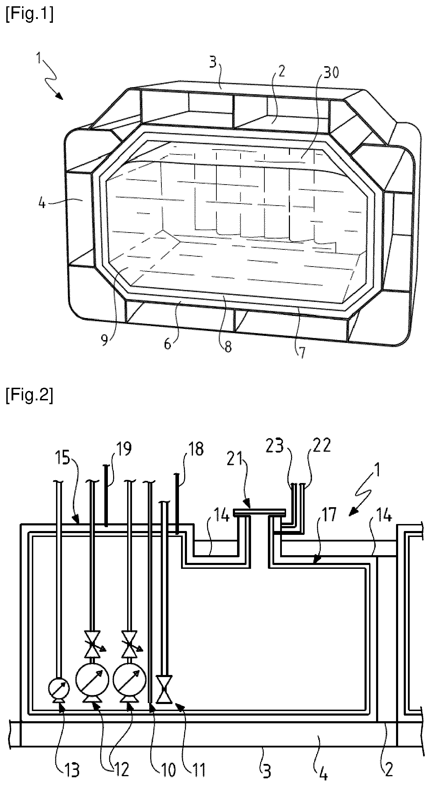

En référence à la [Fig.1], on a représenté schématiquement une coupe transversale d'une cuve 1 d'un navire méthanier réalisée selon la technologie des cuves à membrane. Un navire peut ainsi comporter une ou plusieurs cuves similaires. Cette cuve est destinée au transport de gaz liquéfié à basse température 30. Un gaz liquéfié à basse température est à l'état de vapeur dans les conditions normales de pression et de température et est placé dans l'état liquide par abaissement de sa température notamment pour son transport. Ce gaz liquéfié à basse température pourra être du Gaz Naturel Liquéfié, du Gaz de Pétrole Liquéfié, de l'éthane liquide, du propane liquide, de l'azote liquide, du dioxygène liquide, de l'argon liquide, du xénon liquide, du néon liquide ou encore de l'hydrogène liquide.

La cuve 1 comprend une structure porteuse apportant la rigidité mécanique. La structure porteuse est une double paroi comprenant une coque intérieure 2 et une coque extérieure 3. La coque intérieure 2 et la coque extérieure 3 délimitent un espace confiné 4 dont les dimensions sont suffisantes pour que des êtres humains puissent s'y mouvoir.

L'espace confiné 4 regroupe les ballasts, les quilles tubulaires, les batardeaux ou cofferdams, les coursives et le pont de fermeture de la cuve 1 aussi appelé « trunk deck »

La cuve 1 comprend en outre une membrane d'étanchéité primaire 9 destinée à être en contact avec le produit contenu dans la cuve, et une membrane d'étanchéité secondaire 7 agencée entre la membrane d'étanchéité primaire 9 et la coque interne 2. La membrane d'étanchéité secondaire 7 est destinée à retenir le produit en cas de fuite dans la membrane d'étanchéité primaire 9. L'espace entre la membrane d'étanchéité primaire 9 et la membrane d'étanchéité secondaire 7 est appelé espace primaire 8 et l'espace entre la membrane d'étanchéité secondaire 7 et la coque interne 2 est appelé espace secondaire 6.

L'espace primaire 8 et l'espace secondaire 6 comprennent des matériaux isolants se présentant sous forme de panneaux juxtaposés en matière thermiquement isolante. Ces panneaux peuvent être en résine synthétique expansée ou cellulaire ou en un autre matériau thermiquement isolant, naturel ou synthétique. De plus ces espaces 6, 8 comprennent un matériau de remplissage tel que de la laine de verre ou de la laine minéral. Ce matériau de remplissage peut être destiné à être inséré entre les panneaux juxtaposés.

La membrane d'étanchéité primaire 9 repose directement sur les matériaux isolants de l'espace primaire 8, et la membrane d'étanchéité secondaire 7 repose directement sur les matériaux isolants de l'espace secondaire 6.

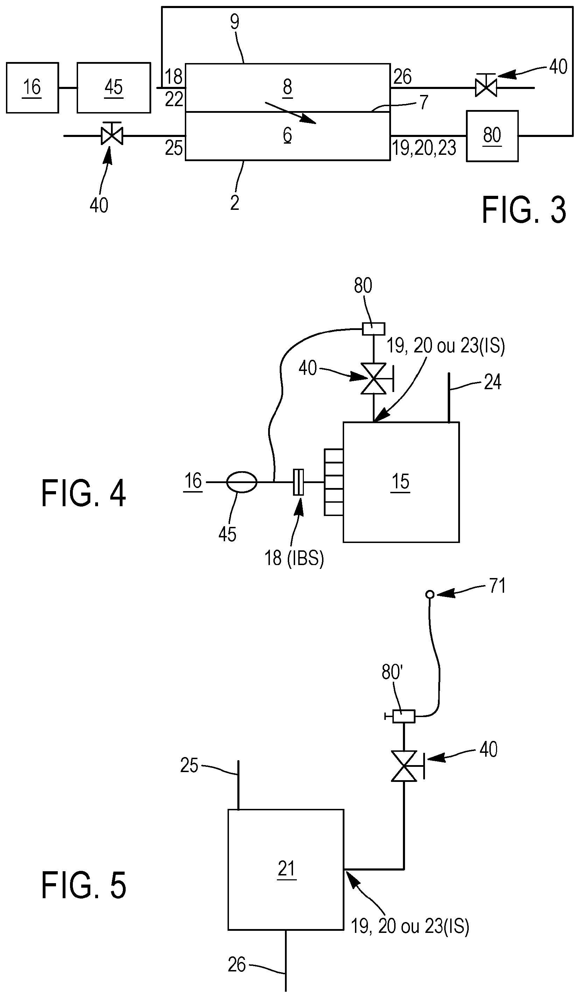

En référence aux figures 2 et 3, la cuve comporte une paroi supérieure 14 laquelle est interrompue en deux emplacements par deux structures saillantes en forme de tourelle ou de cheminée. Elles sont destinées à faire passer des équipements de manutention de cargaison pour manutentionner une phase liquide et une phase vapeur du gaz liquéfié à basse température en vue de son stockage dans la cuve. La première tourelle est un dôme liquide 15 qui sert de point de pénétration pour les divers équipements de manutention à savoir dans l'exemple représenté une ligne de remplissage 10, une ligne de pompage d'urgence 11, des lignes de déchargement liées à des pompes de déchargement 12, une ligne de pulvérisation (non représentée) et une ligne d'alimentation liée à une pompe de pulvérisation 13. La deuxième tourelle est un dôme vapeur 21 qui sert de point de pénétration pour une conduite collectrice de vapeur. Le fonctionnement de ces équipements est connu par ailleurs.

L'espace primaire 8 comprend une entrée primaire 18 de gaz et une sortie primaire 26 de gaz. Il peut comprendre en outre une deuxième entrée primaire 22 de gaz. L'espace secondaire 6 comprend une entrée secondaire 25 de gaz et une sortie secondaire 19 de gaz. L'espace secondaire 6 peut comprendre en outre une deuxième sortie secondaire 20 de gaz et une troisième sortie secondaire 23 de gaz.

La cuve peut comprendre en outre une soupape de sécurité 24 en cas de surpression dans les espaces primaire 8 et secondaire 6.

La membrane d'étanchéité secondaire 7 est invisible et inaccessible une fois la cuve fabriquée. Le procédé de contrôle de l'étanchéité d'une cuve selon l'invention permet de détecter et localiser les défauts de la membrane d'étanchéité secondaire 7 et convient à la plupart des technologies de cuve.

En se référant à la [Fig.1] ou 3, le procédé repose sur l'utilisation d'un gradient thermique généré entre les espaces primaire 8 et secondaire 6 d'une cuve 1 chargée de gaz liquéfié à basse température 30 pour détecter par imagerie thermique ou thermographie l'impact sur la coque intérieure 2 d'un gaz inerte traversant la membrane d'étanchéité secondaire 7. La cuve est chargée à au moins 20% de sa capacité totale en gaz liquéfié à basse température ou est refroidie par pulvérisation d'un liquide cryogénique.

Sur cette [Fig.3] est illustré l'un des aspects principaux du procédé de contrôle selon l'invention, à savoir la réinjection d'au moins une partie du gaz inerte introduit dans l'espace primaire 8 grâce à un moyen d'aspiration 80, en l'espèce une pompe classique, qui récupère à une sortie secondaire 19, 20 ou 23 de l'espace secondaire 6 une partie ou la totalité de ce gaz inerte injecté pour l'amener, via une conduite, à circuler à nouveau dans l'espace primaire 8, via une des entrées primaires 18 ou 22. Sur les figures 3 à 6, des vannes 40 sont disposées sur les conduits pour réguler le débit ou stopper la circulation dans le conduit considéré.

Les figures 4 à 6 présentent des arrangements pour effectuer cette recirculation du gaz inerte, étant entendu que ces modes de réalisation sont des exemples non limitatifs qui peuvent par ailleurs être combinés.

Ainsi, sur la [Fig.4], un dispositif d'injection 45 est installé à l'entrée primaire 18 de gaz et rattaché au réservoir de gaz inerte 16. Le gaz inerte est par exemple du diazote. Ce dispositif d'injection 45 permettra d'injecter le gaz inerte dans l'espace primaire 8. Un dispositif d'aspiration 80 est aussi installé au niveau de la sortie secondaire 19 de gaz.

Ce moyen d'aspiration 80 a deux fonctions principales, tout d'abord permettre de faciliter la création d'un différentiel de pression entre l'espace primaire 8 et l'espace secondaire 6 même si la porosité de la membrane d'étanchéité secondaire 7 est très importante, et faire recirculer tout ou partie du diazote injecté dans l'espace primaire 8. Bien entendu, le gaz inerte récupéré par le moyen d'aspiration 80 ne doit pas être mélangé avec un autre gaz ou constituant. Afin de s'assurer que cette recirculation de gaz inerte n'inclut aucun gaz annexe ou parasite, on peut prévoir d'insérer des filtres à particules dans le circuit de recirculation.

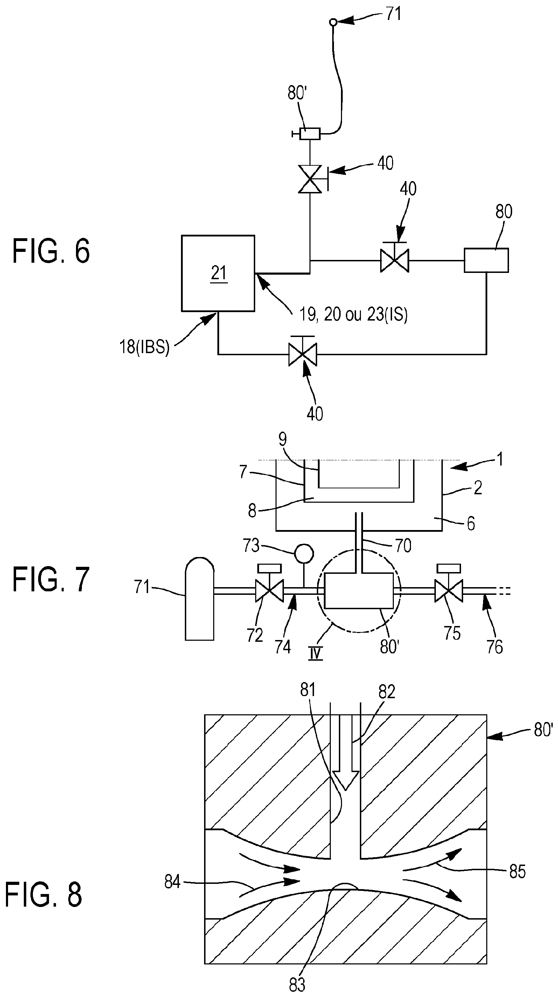

Sur les figures 5 et 6 est visible un système d'aspiration 80' qui lui présente uniquement la fonction d'aspiration du gaz inerte au niveau de l'espace secondaire 6, mais pas la possibilité ou la fonction de réinjection de ce gaz inerte dans l'espace primaire 8. Ainsi, on peut ajouter à l'architecture représenté sur la [Fig.4], qui peut se suffire à elle-même, le module d'architecture représenté sur la [Fig.5] dans lequel le système d'aspiration 80' aspire le gaz inerte au niveau du gaz dôme 21, via une sortie secondaire 19, 20 ou 23.

Plus précisément, dans l'architecture de la [Fig.4], le gaz inerte est injecté dans l'espace primaire 8 au niveau du dôme liquide 15 et la récupération du gaz inerte est effectuée également au niveau du dôme liquide 15, par l'intermédiaire d'une sortie secondaire 19, 20 ou 23. Une vanne 40 permet de régler le débit aspiré par le moyen d'aspiration 80. Le moyen d'aspiration 80 est relié au circuit d'amenée du gaz inerte, depuis le réservoir 16, en aval (comme représenté sur cette [Fig.4]) ou en amont du dispositif d'injection 45, de préférence en amont dudit dispositif 45 de manière à utiliser la puissance d'aspiration de ce dernier 45.

Sur la [Fig.6] est représenté une architecte dans laquelle on utilise un moyen d'aspiration 80, faisant recirculer le gaz inerte dans l'espace primaire 8, via par exemple l'entrée primaire 18, et un système d'aspiration 80' qui rejette classiquement le gaz inerte récupéré dans l'air environnant. Bien entendu, l'architecture de la [Fig.6] doit être associer par exemple à un dispositif d'injection 45 pour initier l'injection de gaz inerte dans l'espace primaire 8.

A titre d'exemple non limitatif, pour une telle architecture utilisant un moyen d'aspiration 80 et un système d'aspiration 80', on peut avoir un dispositif d'injection 45 de 100 m$^3$/heure (mètre cube par heure), des pompes 80 et 80' chacune avec un débit de 50 m$^3$/heure. Dans ce cas, le flux réinjecté par la pompe 80 étant de 50 m$^3$ / heure, on peut réguler ou abaisser la capacité du dispositif d'injection à 50 m$^3$/heure pour disposer d'un débit d'injection 45 constant. Bien entendu, ce rapport de 50% de recyclage ou de réinjection en gaz inerte peut être choisi différent, par choix de pompe(s) 80 plus ou moins puissante et/ou par un jeu de régulation de débit à l'aide des vannes 40 du circuit.

Dans le cas où le moyen d'aspiration 80 réalise seul l'aspiration et donc la réinjection de gaz inerte dans l'espace primaire 8, après quelques instants, on peut couper ou arrêter le dispositif d'injection 45 de sorte que seul le moyen d'aspiration 80 réalise la circulation de gaz inerte, par recirculation permanente de ce dernier le temps de mener les opérations de contrôle. Bien entendu, dans une telle solution, le moyen d'aspiration 80 doit consister en une pompe, ou une série de pompes, suffisamment puissante pour prendre seul la fonction d'injection de gaz inerte et de recirculation de ce dernier.

Le dispositif d'aspiration 80' peut être par exemple un système de type Venturi. Il sera alors aussi connecté au système d'air comprimé 71 du bateau. En référence aux figures 7 et 8, le fonctionnement du système de type Venturi va être décrit. Lorsque les vannes 72 et 75 sont ouvertes, un flux d'air comprimé pénètre dans le côté entrée du convergent-divergent, comme indiqué par les flèches 84 et provoque par effet Venturi une dépression dans la canalisation latérale 81 du système d'aspiration à effet Venturi 80' qui est reliée à la canalisation de prélèvement 70 relié à la sortie secondaire 19 de gaz de l'espace secondaire 6. Il s'ensuit l'aspiration d'une quantité de gaz inerte contenu dans l'espace secondaire 6, comme indiqué par la flèche 82. Le flux de gaz inerte aspiré et le flux d'air comprimé se mélangent dans le côté sortie du convergent-divergent, comme indiqué par les flèches 85 et s'écoulent dans la canalisation 76 donnant sur l'extérieur de la cuve.

De préférence, une vanne 40 est également prévue sur la canalisation de prélèvement 70 que l'on ouvre seulement après avoir établi un flux d'air comprimé stable à une vitesse appropriée dans la conduite principale 83. Ceci permet d'éviter un reflux d'air en direction de l'espace secondaire 6 lors de la phase de démarrage du flux d'air comprimé. On peut de la même manière fermer complètement ou partiellement cette vanne avant d'interrompre le flux de d'air comprimé ou pour réguler le débit/flux d'aspiration.

Avant de procéder aux étapes principales, soit la mise au différentiel de pression P1 (étape dite principale) et à l'étape dite intermédiaire, on peut réduire le chauffage de l'espace confiné 4 au moins 3 heures avant la détection par thermographie. En effet, le chauffage pourrait masquer un éventuel point froid sur la coque interne 2.

Ensuite, on s'assure que la pression de gaz dans la cuve 1, si elle est remplie d'un gaz liquéfié à basse température, est supérieure à 50 mbarg. Puis la valeur de la pression dans l'espace secondaire 6 est réduite pour atteindre une valeur comprise entre 1 mbarg et 5 mbarg sans utiliser le dispositif d'aspiration et en ne laissant en position ouverte que la sortie secondaire 19 de gaz, toutes les autres entrées et sortie de gaz de l'espace secondaire 6 étant fermées. La sortie secondaire 19 de gaz est préférentiellement située sur le dôme liquide 15. Toutefois, on peut accélérer le processus en connectant le dispositif d'aspiration 80, 80' à une deuxième sortie secondaire 20 de gaz de l'espace secondaire qui est alors mis en position ouverte. La deuxième sortie secondaire 20 de gaz est préférentiellement située sur le dôme liquide 15. Si cela ne devait pas suffire alors le dispositif d'aspiration 80, 80' pourrait être connecté à une troisième sortie secondaire 23 de gaz de l'espace secondaire qui est alors aussi mise en position ouverte. La troisième sortie secondaire 23 de gaz est préférentiellement située sur le dôme liquide 15. Eventuellement il est possible d'utiliser un dispositif d'aspiration 80 pour chaque sortie de gaz de l'espace secondaire.

Ensuite, ou en parallèle à l'étape décrite précédemment, on actionne le dispositif d'injection 45 pour injecter du diazote à partir de la source de gaz 71 dans l'espace primaire 8 à travers l'entrée primaire 18 de gaz pour que la valeur de la pression dans l'espace primaire 8 atteigne une valeur comprise entre 21 et 29 mbar au-dessus de la pression de l'espace secondaire 6. Seule l'entrée primaire 18 de gaz est laissée en position ouverte, toutes les autres entrées et sortie de gaz de l'espace primaire 8 étant fermées. Si cela n'est pas suffisant, le dispositif d'injection 45 pourra être aussi connecté à une deuxième entrée primaire 22 de gaz de l'espace primaire 8. Cette deuxième entrée primaire 22 de gaz peut être située au niveau du dôme gaz. Eventuellement, on attend alors la stabilisation de la pression. Cela peut durer entre 30 et 60 min.

Les pressions des espaces primaire et secondaire sont gérées dans les plages de pressions acceptables par des soupapes de sécurité (non représentées) des espaces primaire et secondaire.

On peut ensuite procéder à la mesure des températures sur la surface extérieure de la coque interne 2 par thermographie depuis l'espace confiné 4.

Une fois la mesure effectuée, les pressions des espaces sont remises à leur valeurs de conditions de fonctionnement normales ainsi que le chauffage de l'espace confiné 4.

Grâce à ce procédé, le gaz inerte est refroidi en passant dans l'espace primaire 6. Puis le gaz inerte refroidi traverse la membrane d'étanchéité secondaire 7 si elle présente des porosités anormales. Le gaz inerte refroidi va alors créer un point froid sur la coque intérieure 2. Une caméra thermique est alors utilisée pour détecter le point froid potentiel sur la surface extérieure de la coque intérieure 2.

Pour mesurer la température de la surface extérieure de la coque interne 2 depuis l'espace confiné 4, un photodétecteur peut être utilisé tel qu'une caméra thermographique à capteur infrarouge du fait de l'étendue dont il faut mesurer la température. Elle enregistre les différents rayonnements infrarouges émis par la surface observée et qui varient en fonction de leur température. Ce type de caméra utilise un conteneur refroidi par des techniques de cryogénie, le capteur pouvant être enfermé dans une enceinte sous vide. Cet abaissement ou cette régulation de la température du capteur peut s'avérer utile pour réduire le bruit thermique à un niveau inférieur à celui du signal de la scène filmée.

Typiquement, on peut utiliser une caméra thermographique à capteur infrarouge capable de détecter des longueurs d'onde comprises entre 7,5 et 13 $\mu$m, avec une sensibilité inférieure à 0,05 K sur un corps noir à 303K $\pm$ 10K et une précision inférieure à 2K sur un corps noir dans l'intervalle de 253K à 353K.

L'image obtenue avec le type de cameras précédemment explicité est appelé un thermogramme et consiste en une image dans laquelle à chaque point de l'image est affectée une valeur de température observée par la caméra thermographique à capteur infrarouge. Pour faciliter la détection visuelle des températures et donc faciliter la localisation d'un point froid sur la coque interne 2, une couleur représentant une température peut être affectée aux points du thermogramme.

Toutefois il est possible d'obtenir des points froids n'ayant pas pour origine un défaut d'étanchéité. Ils peuvent être dus à d'autres phénomènes ayant lieu dans l'espace secondaire tels que la conduction, la convection naturelle, la convection forcée ou la radiation. Pour les éliminer et affiner la détection de fuites dans la membrane d'étanchéité secondaire 7 les données obtenues avec la caméra thermographique peuvent être post-traitées. Ainsi le gradient de température représenté par le point froid doit respecter les deux conditions suivantes :

$$|\Delta T_{\text{ultérieur}}| < |\Delta T_{\text{intermédiaire}}| < |\Delta T_{\text{principal}}| \text{ et } |\Delta T_{\text{principal}}| - |\Delta T_{\text{ultérieur}}| \geq 1 \text{ K}$$

Les termes « ultérieur », « intermédiaire » et « principale » en lien avec la température renvoient aux mesures de température suite aux étapes dites respectivement ultérieure, intermédiaire et ultérieure.

$\Delta T_{\text{ultérieur}}$ désigne la différence de température entre la température d'un point de l'image mesurée à l'étape ultérieure et la température moyenne d'une zone de référence de la coque interne mesurée à l'étape ultérieure,

$\Delta T_{\text{intermédiaire}}$ désigne la différence de température entre la température du point précédent de l'image mesurée à l'étape intermédiaire et la température moyenne d'une zone de référence de la coque interne mesurée à l'étape intermédiaire,

$\Delta T_{\text{principal}}$ désigne la différence de température entre la température du point précédent de l'image mesurée à l'étape principale de mesure de température et la température moyenne d'une zone de référence de la coque interne mesurée à l'étape principale.

Dans son processus complet, le procédé de contrôle selon l'invention comprend quatre étapes successives, à savoir :

1. une étape préliminaire avec une mesure de température dans les conditions normales de fonctionnement de la cuve 1, puis
2. une étape intermédiaire avec une mesure de température dans laquelle le différentiel de pression entre l'espace primaire 8 et l'espace secondaire 6 - au bénéfice de l'espace primaire 8 - est compris entre 500 Pa et 1500 Pa, préférentiellement entre 800 Pa et 1200 Pa, puis
3. une étape principale avec une mesure de température dans laquelle le différentiel de pression entre l'espace primaire 8 et l'espace secondaire 6 est égal à P1, puis
4. une étape ultérieure avec une mesure de température dans les conditions normales de fonctionnement de la cuve 1.

Il est important de noter que seuls les étapes 3 et 4 sont essentielles, autrement dit le procédé de contrôle selon l'invention doit réaliser au moins ces deux étapes successivement.

Le procédé de contrôle de l'étanchéité d'une cuve peut ainsi comprendre une étape préliminaire dont le but est de s'assurer qu'il n'y a pas de point froid sur la coque interne dans des conditions normales de fonctionnement de la cuve. Elle peut aussi permettre de vérifier localement l'émissivité de la peinture de coque intérieure afin de déterminer les performances de mesure de la température.

Tout d'abord le chauffage l'espace confiné est réduit ou arrêté au moins 3 heures avant l'inspection. Les pressions des espaces primaire 8 et secondaire 6 sont maintenues conformément aux conditions de fonctionnement normales de la cuve, par exemple la pression de l'espace secondaire 6 est supérieure à la pression de l'espace primaire 8. Puis la coque intérieure 2 est complètement inspectée à l'aide d'une caméra thermique. Cela permet de contrôler thermiquement la coque interne 2 dans les conditions normales de fonctionnement de la cuve. À la fin de l'inspection, le système de l'espace confiné 4 est remis en remis en conditions de fonctionnement normales.

Afin de s'assurer en particulier que la cuve 1 n'a pas été endommagée ou son état aggravé par les étapes principales, on effectue une étape ultérieure de mesure de température de la surface extérieure de la coque intérieure 2. Cette étape ultérieure est identique en tout point à l'étape préliminaire sur les conditions de déroulement. Si l'étape préliminaire a été effectué, on pourra alors comparer les thermogrammes obtenus pour conclure sur l'état de la cuve en conditions normales de fonctionnement. Si l'étape préliminaire n'a pas été effectuée, on pourra alors s'assurer qu'il n'y a pas de point froid sur le thermogramme.

Enfin, le procédé peut aussi inclure une étape intermédiaire pour déterminer si la cuve est apte à subir les étapes principales. Ainsi l'étape intermédiaire peut se dérouler avant les étapes principales et après l'étape préliminaire. Cette étape consiste à mesurer la température de la surface extérieure de la coque interne 2 depuis l'espace confiné 4 lorsque différence de pression entre l'espace primaire 8 et l'espace secondaire 6 est comprise entre 800 Pa et 1200 Pa, l'espace primaire 8 étant en surpression de ladite différence de pression par rapport à l'espace secondaire 6.

Avant de procéder à cette étape intermédiaire on pourra réduire le chauffage de l'espace confiné 4 au moins 3 heures avant la détection par thermographie. En effet, là aussi le chauffage pourrait masquer un éventuel point froid sur la coque interne 2. Ensuite, on s'assure que la pression de gaz dans la cuve 1, si elle est remplie d'un gaz liquéfié à basse température, est supérieure à 50 mbarg. Puis la valeur de la pression dans l'espace secondaire 6 est réduite pour atteindre une valeur comprise entre 1 mbarg et 5 mbarg en utilisant le dispositif d'aspiration et en ne laissant en position ouverte que la sortie secondaire 19 de gaz. Après, on actionne le dispositif d'injection 45 pour injecter du diazote à partir de la source de gaz 71 dans l'espace primaire 8 à travers l'entrée primaire 18 de gaz pour que la valeur de la pression dans l'espace primaire 8 atteigne une valeur comprise entre 8 et 12 mbar au-dessus de la pression de l'espace secondaire 6. Seule l'entrée primaire 18 de gaz est laissée en position ouverte, toutes les autres entrées et sortie de gaz de l'espace primaire 8 étant fermées. Eventuellement, on attend alors la stabilisation de la pression. Cela peut durer entre 30 et 60 min. Les pressions des espaces primaire et secondaire sont gérée dans les plages de pression acceptable par des soupapes de sécurité (non représentées) des espaces primaire et secondaire. On peut ensuite procéder à l'inspection thermique de la surface extérieure de la coque interne 2 par thermographie depuis l'espace confiné 4. Une fois la mesure effectuée, les pressions des espaces sont remises à leur valeurs de conditions de fonctionnement normales ainsi que le chauffage de l'espace confiné 4.

Ainsi si l'inspection thermographique réalisée à la suite de cette étape intermédiaire ne présente pas de points froids importants alors la cuve pourra subir les étapes principales du procédé.

En raison de la géométrie du dôme liquide 15 et du dôme gaz 21, le procédé décrit ci-dessus peut éventuellement être mis en échec. En effet, les conditions climatiques extérieures et les champs de température dans et au voisinage de ces tourelles peuvent fausser les mesures de température avec la caméra thermographique et/ou être très complexes à prendre en compte dans le post-traitement des mesures de température. Le procédé peut être alors complété avec une mesure du flux d'azote traversant les fuites potentielles de la membrane d'étanchéité secondaire 7. Préférentiellement, le flux sera orienté de l'espace primaire vers l'espace secondaire.

Un premier débitmètre est installé au dôme liquide 15. Le débitmètre est installé sur la canalisation reliant la source de d'azote 16 et le l'entrée primaire 18 de gaz. Les autres entrées primaires sont mises en position fermée. Les sorties primaires sont elles aussi en position fermées. Ainsi le seul trajet possible du flux d'azote est de passer vers l'espace secondaire si la membrane d'étanchéité secondaire 7 présente une porosité anormale. Ce débitmètre permettra donc de mesurer le flux d'azote entrant dans l'espace primaire.

Un deuxième débitmètre est installé, il est placé au niveau de la sortie secondaire 19 de gaz de l'espace secondaire 6 située sur le dôme gaz 21. Les entrées secondaires et les autres sorties secondaires sont en position fermées. Ainsi le débitmètre mesure bien le flux d'azote passant de l'espace primaire 8 à l'espace secondaire 6 via une porosité anormale de la membrane d'étanchéité secondaire 7.

Avec cette disposition, on s'assure que le flux d'azote passe par les débitmètres et on évite les pertes d'information. Il est à noter que l'emplacement des débitmètres peut être différent sur chaque navire.

Avant l'installation des débitmètres, on s'assure que les pressions dans les espaces primaire et secondaire sont normales c'est-à-dire les pressions observées dans les conditions normales de fonctionnement. La pression de vapeur dans la cuve, si elle est remplie de gaz liquéfié à basse température, doit être maintenue au-dessus de 50 mbarg, préférentiellement au-dessus de 100 mbarg. Ensuite les entrées primaires et secondaires, et les sorties primaires et secondaires pouvant influencer la mesure du flux d'azote sont mises en position fermée. Puis les débitmètres sont installés, le premier débitmètre est mis à l'entrée primaire 18 de gaz et le deuxième débitmètre est mis à la sortie secondaire 19 de gaz ou à la deuxième sortie secondaire 20 de gaz. Une fois les débitmètres montés, on alimente l'espace primaire 8 en azote tout en régulant cette alimentation à l'aide d'une vanne, par exemple jusqu'à 12 m$^3$/h (mètre cube par heure). Alors on débute la mesure des débits entrant dans l'espace primaire et sortant de l'espace secondaire avec les débitmètres. Le contrôle et la mesure des débits à l'entrée primaire 18 de gaz et à la sortie secondaire 19 de gaz dure au maximum 5 heures, préférentiellement 3 heures.

A la fin des mesures, les débits à l'entrée primaire 18 de gaz et à la sortie secondaire 19 de gaz sont comparés. Si les mesures sont similaires, alors la membrane d'étanchéité secondaire 7 présente bien une porosité anormale, notamment au niveau du dôme liquide et/ou dôme gaz. En revanche si les débits sont fortement différents voire le débit à la sortie secondaire de gaz est nul alors la membrane d'étanchéité secondaire 7 ne présente pas de porosité anormale où que ce soit.

L'installation décrite ci-dessus et exploitant le procédé décrit ci-dessus peut être utilisée par exemple dans une installation terrestre ou dans un ouvrage flottant comme un navire méthanier ou autre.

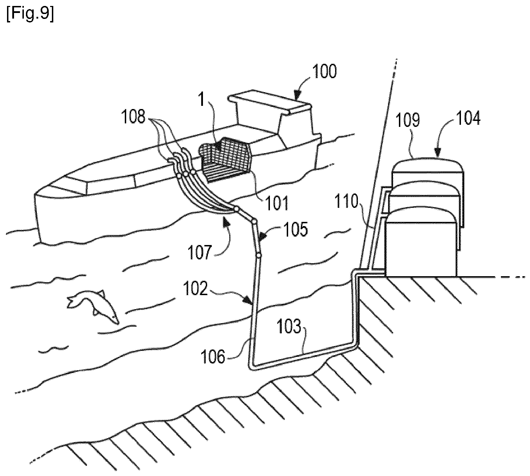

En référence à la [Fig.9], une vue écorchée d'un navire méthanier 100 montre une installation de stockage d'un gaz liquéfiée à basse température comportant une cuve étanche et isolée 1 de forme générale prismatique montée dans la double coque 101 du navire. La cuve 1 comporte une membrane d'étanchéité primaire destinée à être en contact avec le gaz liquéfié à basse température GNL contenu dans la cuve tel que du GNL, une membrane d'étanchéité secondaire agencée entre la membrane d'étanchéité primaire et la double coque 101 du navire, et deux barrières isolante agencées respectivement entre la membrane d'étanchéité primaire et la membrane d'étanchéité secondaire et entre la membrane d'étanchéité secondaire et la double coque 101.

La [Fig.9] représente un exemple de terminal maritime comportant un poste de chargement et de déchargement 103, une conduite sous-marine 104 et une installation à terre 105. Le poste de chargement et de déchargement 103 est une installation fixe off-shore comportant un bras mobile 106 et une tour 107 qui supporte le bras mobile 106. Le bras mobile 106 porte un faisceau de tuyaux flexibles isolés 108 pouvant se connecter aux canalisations de chargement/déchargement 109. Le bras mobile 106 orientable s'adapte à tous les gabarits de méthaniers. Une conduite de liaison non représentée s'étend à l'intérieur de la tour 107. Le poste de chargement et de déchargement 103 permet le chargement et le déchargement du navire 100 depuis ou vers l'installation à terre 105. Celle-ci comporte des cuves de stockage de gaz liquéfié à basse température 110 et des conduites de liaison 111 reliées par la conduite sous-marine 104 au poste de chargement et de déchargement 103. La conduite sous-marine 104 permet le transfert du gaz liquéfié à basse température entre le poste de chargement et de déchargement 103 et l'installation à terre 105 sur une grande distance, par exemple 5 km, ce qui permet de garder le navire 100 à grande distance de la côte pendant les opérations de chargement et de déchargement.

Pour engendrer la pression nécessaire au transfert du gaz liquéfié à basse température, on met en œuvre des pompes embarquées dans le navire 100 et/ou des pompes équipant l'installation à terre 105 et/ou des pompes équipant le poste de chargement et de déchargement 103.

**Revendications**

1. Procédé de contrôle de l'étanchéité d'une cuve (1) étanche et thermiquement isolante de stockage d'un gaz liquéfié à basse température (30), la cuve (1) étant à basse température (30), la cuve (1) comportant une structure porteuse présentant une coque interne (2) et une coque externe (3), un espace confiné (4) entre la coque interne (2) et la coque externe (3), une membrane d'étanchéité primaire (9) destinée à être en contact avec le gaz liquéfié à basse température (30) contenu dans la cuve (1), et une membrane d'étanchéité secondaire (7) agencée entre la membrane d'étanchéité primaire (9) et la coque interne (2), un espace primaire (8) entre la membrane d'étanchéité primaire (9) et la membrane d'étanchéité secondaire (7) et un espace secondaire (6) entre la membrane d'étanchéité secondaire (7) et la coque interne (2), l'espace primaire (8) et l'espace secondaire (6) comprenant des matériaux isolants, l'espace primaire (8) comprenant au moins une entrée primaire (18) de gaz et l'espace secondaire (6) comprenant au moins une sortie secondaire (19) de gaz, ladite membrane d'étanchéité primaire reposant directement sur les matériaux isolants contenus dans l'espace primaire et ladite membrane d'étanchéité secondaire reposant directement sur les matériaux isolants contenus dans l'espace secondaire, le procédé comprenant les étapes successives suivantes pour détecter la localisation d'un défaut d'étanchéité de la membrane d'étanchéité secondaire (7) sous la forme d'un point froid sur la surface extérieure de la coque interne (2) :

   - une étape dite principale dans laquelle l'espace secondaire (6) est mis à une pression inférieure à la pression de l'espace primaire (8), avec un différentiel de pression P1, par injection d'un gaz inerte dans l'espace primaire par l'intermédiaire de l'entrée primaire (18) de gaz et en créant un échappement ou une aspiration au niveau de la sortie secondaire (19) de gaz de l'espace secondaire, puis en mesurant la température d'une surface extérieure de la coque interne (2) depuis l'espace confiné (4) situé autour de la coque interne (2) ;
   - une étape dite ultérieure dans laquelle on mesure la température de la surface extérieure de la coque interne (2) depuis l'espace confiné (4) dans les conditions normales de fonctionnement de la cuve (1) ;

   **caractérisé en ce que**, pendant l'étape principale, au moins une partie du gaz inerte injecté dans l'espace primaire (8) est récupérée par l'intermédiaire d'au moins une sortie secondaire (19, 20 ou 23) de l'espace secondaire (6) et est réinjectée dans l'espace primaire (8).

2. Procédé selon la revendication 1, dans lequel la totalité du gaz inerte injecté dans l'espace primaire (8) est réinjecté dans ce dernier (8), après sa récupération par l'intermédiaire d'au moins un moyen d'aspiration (80) relié à une sortie secondaire (19, 20 ou 23) de l'espace secondaire (6).

3. Procédé selon la revendication 1, dans lequel seulement une partie du gaz inerte injecté dans l'espace primaire (8), avantageusement représentant entre 20% et 80% du gaz inerte injecté dans l'espace primaire (80), est réinjecté dans ce dernier (8), après sa récupération par l'intermédiaire d'au moins un moyen d'aspiration (80) relié à une sortie secondaire de l'espace secondaire (6).

4. Procédé selon l'une quelconques des revendications précédentes, dans lequel il comprend une étape dite préliminaire dans laquelle on mesure la température de la surface extérieure de la coque interne (2) depuis l'espace confiné (4) dans les conditions normales de fonctionnement de la cuve (1).

5. Procédé selon l'une quelconque des revendications précédentes, dans lequel le différentiel de pression P1 est :

   - compris entre 500 Pa et 1500 Pa, de préférence compris entre 800 Pa et 1200 Pa, pendant une durée d'au moins 10 heures, préférentiellement au moins 12 heures, ou
   - compris entre 1800 Pa et 3200 Pa, de préférence compris entre 2100 Pa et 2900 Pa.

6. Procédé selon l'une quelconque des revendications précédentes, dans lequel l'étape dite principale est précédé d'une étape dite intermédiaire dans laquelle l'espace secondaire (6) est mis à une pression inférieure à la pression de l'espace primaire (8), avec un différentiel de pression compris entre 500 Pa et 1500 Pa, de préférence entre 800 Pa et 1200 Pa, par injection d'un gaz inerte dans l'espace primaire par l'intermédiaire de l'entrée primaire (18) de gaz et en créant un échappement ou une aspiration au niveau de la sortie secondaire (19) de gaz de l'espace secondaire, puis en mesurant la température d'une surface extérieure de la coque interne (2) depuis l'espace confiné (4) situé autour de la coque interne (2).

7. Procédé selon l'une quelconque des revendications précédentes, dans lequel le gaz inerte consiste en du diazote.

8. Procédé selon l'une quelconque des revendications précédentes, dans lequel la durée de chaque mesure de température est d'au plus cinq heures, préférentiellement en au plus trois heures.

9. Procédé selon l'une quelconque des revendications précédentes, dans lequel P1, avantageusement le différentiel de pression de l'étape dite intermédiaire, est maintenue stable pendant la mesure de la température.

10. Installation de stockage flottante ou terrestre d'un gaz liquéfié à basse température (30) pour la mise en œuvre du procédé de contrôle selon l'une quelconque des revendications précédentes, comportant :

- une cuve (1) à basse température (30) comportant une structure porteuse présentant une coque interne (2) et une coque externe (3) , l'espace entre la coque interne (2) et la coque externe (3) étant appelé espace confiné (4), une membrane d'étanchéité primaire (9) destinée à être en contact avec le gaz liquéfié à basse température (30) contenu dans la cuve, et une membrane d'étanchéité secondaire (7) agencée entre la membrane d'étanchéité primaire (9) et la coque interne (2), l'espace entre la membrane d'étanchéité primaire (9) et la membrane d'étanchéité secondaire (7) est appelé espace primaire (8) et l'espace entre la membrane d'étanchéité secondaire (7) et la coque interne (2) est appelé espace secondaire (6), l'espace primaire (8) et l'espace secondaire (6) comprenant des matériaux isolants, l'espace primaire (8) comprenant au moins une entrée primaire (18) de gaz, l'espace secondaire (6) comprenant au moins une sortie secondaire (19) de gaz, ladite membrane d'étanchéité primaire reposant directement sur les matériaux isolants contenus dans l'espace primaire et ladite membrane d'étanchéité secondaire reposant directement sur les matériaux isolants contenus dans l'espace secondaire,
- un réservoir de gaz inerte (16) agencé de manière à injecter du gaz inerte dans l'espace primaire (8) par l'intermédiaire de l'entrée primaire de gaz,
- un dispositif d'injection (45) apte à injecter du gaz inerte du réservoir de gaz inerte (16) par l'entrée primaire (18) de gaz, et ainsi à mettre sous pression l'espace primaire (8) par rapport à l'espace secondaire (6),
- un dispositif d'aspiration (80, 80') connecté à la sortie secondaire (19) de gaz pour créer une pression inférieure dans l'espace secondaire (6) à la pression dans l'espace primaire (8),
- un dispositif de mesure de température de la surface extérieure de la coque interne (2),
- un système d'affichage des mesures de température afin de localiser un défaut d'étanchéité de la membrane d'étanchéité secondaire (7) sous la forme d'un point froid sur la surface extérieure de la coque interne (2).
**caractérisé en ce que** le dispositif d'aspiration comprend au moins un moyen d'aspiration (80), consistant en une pompe, aspirant au moins en partie le gaz inerte dans l'espace secondaire (6) et le réinjectant dans l'espace primaire (8), de préférence par l'intermédiaire du susdit dispositif d'injection (45).

11. Installation selon la revendication 10, dans laquelle le susdit moyen d'aspiration (80) forme le seul moyen d'aspiration (80) dudit dispositif de sorte que la totalité du gaz inerte récupéré dans l'espace secondaire (6) est réinjecté dans l'espace primaire (8).

12. Installation selon la revendication 10, dans laquelle le dispositif d'aspiration comprend également au moins un système d'aspiration (80') récupérant le gaz inerte ne le réinjectant pas dans l'espace primaire (8).

13. Installation selon la revendication 12, dans laquelle le système d'aspiration (80') est un système d'aspiration par effet Venturi (80') comprenant une conduite principale (83) présentant une entrée apte à être reliée à une source de gaz (71) sous pression et une sortie vers l'extérieur de la cuve (1), une conduite d'aspiration (81) présentant un côté amont apte à être relié au port de sortie de l'espace secondaire (6) et un côté aval débouchant latéralement dans un convergent-divergent de la conduite principale (83) de manière à ce qu'un flux de gaz dans la conduite principale (83) produise une dépression dans la conduite d'aspiration (81).

14. Installation selon la revendication 13, dans laquelle la source de gaz (71) sous pression est un circuit d'air comprimé.

15. Installation selon l'une quelconque des revendications 10 à 14, dans laquelle le dispositif d'injection (45) comprend un compresseur apte à injecter le gaz inerte provenant du réservoir de gaz inerte (16) à une pression comprise entre 3 et 8 bars.

16. Navire (100) pour le transport d'un gaz liquéfié à basse température (30), le navire comportant une installation de stockage d'un gaz liquéfié à basse température (30) selon l'une quelconque des revendications 10 à 15.


**Patentansprüche**

1. Verfahren zur Dichtheitsprüfung eines dichten und wärmeisolierenden Gefäßes (1) zur Lagerung eines Niedrigtemperatur-Flüssiggases (30), wobei das Gefäß (1) eine niedrige Temperatur (30) aufweist, wobei das Gefäß (1) eine Tragstruktur umfasst, die eine innere Hülle (2) und eine äußere Hülle (3) aufweist, wobei zwischen der inneren Hülle (2) und der äußeren Hülle (3) ein umschlossener Raum (4) vorhanden ist, eine primäre Dichtungsmembran (9) die dazu bestimmt ist, mit dem im Gefäß (1) enthaltenen Flüssiggas (30) in Kontakt zu stehen, und eine sekundäre Dichtungsmembran (7) die zwischen der primären Dichtungsmembran (9) und der inneren Hülle (2) angeordnet ist, einen primären Raum (8) zwischen der primären Dichtungsmembran (9) und der sekundären Dichtungsmembran (7) und einen sekundären Raum (6) zwischen der sekundären Dichtungsmembran (7) und der inneren Hülle (2), wobei der primäre Raum (8) und der sekundäre Raum (6) Isoliermaterialien umfassen, wobei der primäre Raum (8) mindestens einen primären Gaseinlass (18) und der sekundäre Raum (6) mindestens einen sekundären Gasauslass (19) umfasst, wobei die primäre Dichtungsmembran direkt auf den im primären Raum enthaltenen Isoliermaterialien aufliegt und die sekundäre Dichtungsmembran direkt auf den im sekundären Raum enthaltenen Isoliermaterialien aufliegt, wobei das Verfahren die folgenden aufeinanderfolgenden Schritte umfasst, um die Stelle einer Undichtigkeit der sekundären Dichtungsmembran (7) in Form einer kalten Stelle auf der Außenfläche der inneren Hülle (2) zu erkennen:

   - einen sogenannten Hauptschritt, in dem der sekundäre Raum (6) mit einem Druckunterschied P1 unter den Druck des primären Raums (8) gesetzt wird, durch Einleiten eines inerten Gases in den primären Raum über den primären Gaseinlass (18) und Erzeugen eines Auslasses oder einer Absaugung am sekundären Gasauslass (19) des sekundären Raums, und anschließendes Messen der Temperatur einer Außenfläche der inneren Hülle (2) aus dem die innere Hülle (2) umgebenden umschlossenen Raum (4);
   - einen sogenannten nachfolgenden Schritt, in dem die Temperatur der Außenfläche der inneren Hülle (2) aus dem umschlossenen Raum (4) unter den normalen Funktionsbedingungen des Gefäßes (1) gemessen wird;

   **dadurch gekennzeichnet, dass** während des Hauptschritts mindestens ein Teil des in den primären Raum (8) eingeleiteten Inertgases über mindestens einen sekundären Auslass (19, 20 oder 23) des sekundären Raums (6) zurückgewonnen und wieder in den primären Raum (8) eingeleitet wird.

2. Verfahren gemäß Anspruch 1, bei dem das gesamte in den primären Raum (8) eingespeiste Inertgas nach seiner Rückgewinnung über mindestens eine mit einem sekundären Auslass (19, 20 oder 23) des sekundären Raums (6) verbundene Absaugvorrichtung (80) wieder in diesen (8) zurückgeführt wird.

3. Verfahren gemäß Anspruch 1, wobei nur ein Teil des in den primären Raum (8) eingeleiteten Inertgases, der vorteilhafterweise zwischen 20 % und 80 % des in den primären Raum (80) eingeleiteten Inertgases darstellt, nach seiner Rückgewinnung über mindestens ein Ansaugmittel (80), das mit einem sekundären Auslass des sekundären Raums (6) verbunden ist, in diesen (8) zurückgeführt wird.

4. Verfahren gemäß einem der vorstehenden Ansprüche, wobei es einen sogenannten Vorlaufschritt umfasst, in dem die Temperatur der Außenfläche der inneren Hülle (2) aus dem umschlossenen Raum (4) unter den normalen Funktionsbedingungen des Gefäßes (1) gemessen wird.

5. Verfahren nach einem der vorstehenden Ansprüche, wobei die Druckdifferenz P1 liegt

   - zwischen 500 Pa und 1500 Pa, vorzugsweise zwischen 800 Pa und 1200 Pa, während einer Dauer von mindestens 10 Stunden, vorzugsweise mindestens 12 Stunden, oder
   - zwischen 1800 Pa und 3200 Pa, vorzugsweise zwischen 2100 Pa und 2900 Pa.

6. Verfahren gemäß einem der vorstehenden Ansprüche, wobei dem sogenannten Hauptschritt ein sogenannter Zwischenschritt vorausgeht, in dem der sekundäre Raum (6) auf einen Druck unterhalb des Drucks des primären Raums (8) gebracht wird, wobei die Druckdifferenz zwischen 500 Pa und 1500 Pa, vorzugsweise zwischen 800 Pa und 1200 Pa liegt, indem ein Inertgas durch den primären Gaseinlass (18) in den primären Raum injiziert wird und ein Auslass oder eine Absaugung am sekundären Gasauslass (19) des sekundären Raums geschaffen wird, und anschließender Messung der Temperatur einer Außenfläche der inneren Hülle (2) aus dem um die innere Hülle (2) herum befindlichen umschlossenen Raum (4).

7. Verfahren nach einem der vorstehenden Ansprüche, wobei das Inertgas aus Distickstoff besteht.

8. Verfahren nach einem der vorstehenden Ansprüche, wobei die Dauer jeder Temperaturmessung höchstens fünf Stunden, vorzugsweise höchstens drei Stunden beträgt.

9. Verfahren gemäß einem der vorstehenden Ansprüche, wobei P1, vorteilhafterweise die Druckdifferenz des sogenannten Zwischenschritts, während der Temperaturmessung stabil gehalten wird.

10. Schwimmende oder erdverbundenen Speicheranlage eines Niedertemperatur-Flüssiggases (30) zur Durchführung des Prüfungsverfahrens gemäß einem der vorstehenden Ansprüche, umfassend:

   - ein Gefäß (1) mit niedriger Temperatur(30), das eine Tragkonstruktion mit einem inneren Hülle (2) und einer äußeren Hülle (3) umfasst, wobei der Raum zwischen der inneren Hülle (2) und der äußeren Hülle (3) als umschlossener Raum (4) bezeichnet wird, eine primäre Dichtungsmembran (9), die dazu bestimmt ist, mit dem im Gefäß enthaltenen Niedertemperatur-Flüssiggas (30) in Kontakt zu stehen, und eine sekundäre Dichtungsmembran (7), die zwischen der primären Dichtungsmembran (9) und der inneren Hülle (2) angeordnet ist, wobei der Raum zwischen der primären Dichtungsmembran (9) und der sekundären Dichtungsmembran (7) als primärer Raum (8) bezeichnet wird und der Raum zwischen der sekundären Dichtungsmembran (7) und den inneren Hüllen (2) als sekundärer Raum (6) bezeichnet wird, wobei der primäre Raum (8) und der sekundäre Raum (6) Isoliermaterialien umfassen, wobei der primäre Raum (8) mindestens einen primären Gaseinlass (18) umfasst, der sekundäre Raum (6) mindestens einen sekundären Gasauslass (19) umfasst, die primäre Dichtungsmembran direkt auf den im primären Raum enthaltenen Isoliermaterialien aufliegt und die sekundäre Dichtungsmembran direkt auf den im sekundären Raum enthaltenen Isoliermaterialien aufliegt,
   - einen Inertgasbehälter (16), der so angeordnet ist, dass er Inertgas über den primären Gaseinlass in den primären Raum (8) einspritzt,
   - eine Einspritzvorrichtung (45), die in der Lage ist, Inertgas aus dem Inertgasbehälter (16) über den primären Gaseinlass (18) einzuspritzen und auf diese Weise den primären Raum (8) gegenüber dem sekundären Raum (6) unter Druck zu setzen,
   - eine Ansaugvorrichtung (80, 80'), die mit dem sekundären Gasaustritt (19) verbunden ist, um im sekundären Raum (6) einen Druck zu erzeugen, der niedriger ist als der Druck im primären Raum (8),
   - eine Vorrichtung zur Messung der Temperatur der Außenfläche der inneren Hülle (2),
   - ein System zur Anzeige der Temperaturmessungen, um eine Undichtigkeit der sekundären Dichtungsmembran (7) in Form einer kalten Stelle an der Außenfläche der inneren Hülle (2) zu lokalisieren,

   **dadurch gekennzeichnet, dass** die Absaugvorrichtung mindestens ein Absaugmittel (80) umfasst, das aus einer Pumpe besteht, die das Inertgas im Sekundärraum (6) mindestens teilweise absaugt und vorzugsweise über die oben genannte Einspritzvorrichtung (45) wieder in den Primärraum (8) einspritzt.

11. Anlage gemäß Anspruch 10, wobei die oben genannte Absaugvorrichtung (80) die einzige Absaugvorrichtung (80) der Vorrichtung bildet,so dass das gesamte im sekundären Raum (6) aufgefangene Inertgas in den primären Raum (8) zurückgeführt wird.

12. Anlage gemäß Anspruch 10, wobei die Absaugvorrichtung außerdem mindestens ein Absaugsystem (80') umfasst, das das Inertgas zurückgewinnt, ohne es in den primären Raum (8) zurückzuführen.

13. Anlage gemäß Anspruch 12, wobei das Absaugsystem (80') ein Venturi-Absaugsystem (80') umfasst, umfassend eine Hauptleitung (83) mit einem Einlass, der mit einer Druckgasquelle (71) verbunden werden kann, und einem Auslass nach außen aus dem Gefäß (1), eine Saugleitung (81) mit einer Stromaufwärtsseite, die mit der Auslassöffnung des sekundären Raums (6) verbunden werden kann, und einer Stromabwärtsseite, die seitlich in eine Konvergenz-Divergenz-Leitung der Hauptleitung (83) mündet, so dass ein Gasstrom in der Hauptleitung (83) einen Unterdruck in der Saugleitung (81) erzeugt.

14. Anlage gemäß Anspruch 13, wobei die Druckgasquelle (71) ein Druckluftkreislauf ist.

15. Anlage gemäß einem der Ansprüche 10 bis 14, wobei die Einspritzvorrichtung (45) einen Kompressor umfasst, der das Inertgas aus dem Inertgasbehälter (16) mit einem Druck zwischen 3 und 8 bar einspritzen kann.

16. Schiff (100) zum Transportieren eines Niedertemperatur-Flüssiggases (30), wobei das Schiff eine Anlage zum Speichern eines Niedertemperatur-Flüssiggases (30) gemäß einem der Ansprüche 10 bis 15 umfasst.

**Claims**

1. A method for checking the sealing of a sealed and thermally insulating tank (1) for storing a liquefied gas at low temperature (30), the tank (1) being at low temperature (30), the tank (1) comprising a carrier structure which has an inner hull (2) and an outer hull (3), a confined space (4) between the inner hull (2) and the outer hull (3), a primary sealing membrane (9) which is intended to be in contact with the liquefied gas at low temperature (30) contained in the tank (1), and a secondary sealing membrane (7) which is arranged between the primary sealing membrane (9) and the inner hull (2), a primary space (8) between the primary sealing membrane (9) and the secondary sealing membrane (7) and a secondary space (6) between the secondary sealing membrane (7) and the inner hull (2), the primary space (8) and the secondary space (6) comprising insulating materials, the primary space (8) comprising at least one primary gas inlet (18) and the secondary space (6) comprising at least one secondary gas outlet (19), said primary sealing membrane resting directly on the insulating materials contained in the primary space and said secondary sealing membrane resting directly on the insulating materials contained in the secondary space, the method comprising the following successive steps for detecting the location of a sealing defect of the secondary sealing membrane (7) in the form of a cold spot on the outer surface of the inner hull (2):

   - a step referred to as main step in which the secondary space (6) is brought to a pressure lower than the pressure of the primary space (8), with a pressure differential P1, by injecting an inert gas into the primary space via the primary gas inlet (18) and causing gas to be expelled or drawn from the secondary gas outlet (19) of the secondary space and then by measuring the temperature of an outer surface of the inner hull (2) from the confined space (4) situated around the inner hull (2);
   - a step referred to as a subsequent step in which the temperature of the outer surface of the inner hull (2) is measured from the confined space (4) under the normal operating conditions of the tank (1);
   **characterized in that**, during the main step, at least some of the inert gas injected into the primary space (8) is recovered by at least one secondary outlet (19, 20 or 23) of the secondary space (6) and is reinjected into the primary space (8).

2. The method as claimed in claim 1, wherein the entirety of the inert gas injected into the primary space (8) is reinjected into said space (8) after having been recovered by at least one suction means (80) connected to a secondary outlet (19, 20 or 23) of the secondary space (6).

3. The method as claimed in claim 1, wherein just some of the inert gas injected into the primary space (8), advantageously representing between 20% and 80% of the inert gas injected into the primary space (80), is reinjected into said space (8) after having been recovered by at least one suction means (80) connected to a secondary outlet of the secondary space (6).

4. The method as claimed in any one of the preceding claims, wherein said method comprises a step referred to as preliminary step in which the temperature of the outer surface of the inner hull (2) is measured from the confined space (4) under the normal operating conditions of the tank (1).

5. The method as claimed in any one of the preceding claims, wherein the pressure differential P1 is:

   - comprised between 500 Pa and 1500 Pa, preferably comprised between 800 Pa and 1200 Pa for a duration of at least 10 hours, preferably at least 12 hours, or
   - comprised between 1800 Pa and 3200 Pa, preferably comprised between 2100 Pa and 2900 Pa.

6. The method as claimed in any one of the preceding claims, wherein the step referred to as the main step is preceded by a step referred to as an intermediate step in which the secondary space (6) is brought to a pressure lower than the pressure of the primary space (8), with a pressure differential of between 500 Pa and 1500 Pa, preferably between 800 Pa and 1200 Pa, by injecting an inert gas into the primary space via the primary gas inlet (18) and causing gas to be expelled or drawn from the secondary gas outlet (19) of the secondary space and then by measuring the temperature of an outer surface of the inner hull (2) from the confined space (4) situated around the inner hull (2).

7. The method as claimed in any one of the preceding claims, wherein the inert gas consists of nitrous oxide.

8. The method as claimed in any one of the preceding claims, wherein the duration of each temperature measurement is at the most five hours, preferably a maximum of three hours.

9. The method as claimed in any one of the preceding claims, wherein P1, advantageously the pressure differential of the step referred to as the intermediate step, is kept stable while the temperature is being measured.

10. A floating or onshore storage installation for a liquefied gas at low temperature (30) for implementing the checking method as claimed in any one of the preceding claims, comprising:

- a tank (1) at low temperature (30) comprising a carrier structure which has an inner hull (2) and an outer hull (3), the space between the inner hull (2) and the outer hull (3) being referred to as the confined space (4), a primary sealing membrane (9) which is intended to be in contact with the liquefied gas at low temperature (30) contained in the tank, and a secondary sealing membrane (7) which is arranged between the primary sealing membrane (9) and the inner hull (2), the space between the primary sealing membrane (9) and the secondary sealing membrane (7) is referred to as the primary space (8) and the space between the secondary sealing membrane (7) and the inner hull (2) is referred to as the secondary space (6), the primary space (8) and the secondary space (6) comprising insulating materials, the primary space (8) comprising at least one primary gas inlet (18), the secondary space (6) comprising at least one secondary gas outlet (19), said primary sealing membrane resting directly on the insulating materials contained in the primary space and said secondary sealing membrane resting directly on the insulating materials contained in the secondary space,
- an inert gas reservoir (16) which is arranged in order to inject inert gas into the primary space (8) through the primary gas inlet,
- an injection device (45) which is capable of injecting inert gas of the inert gas reservoir (16) via the primary gas inlet (18), and thus placing the primary space (8) under pressure relative to the secondary space (6),
- a suction device (80, 80') which is connected to the secondary gas outlet (19) in order to generate a lower pressure in the secondary space (6) than the pressure in the primary space (8),
- a device for measuring the temperature of the outer surface of the inner hull (2),
- a system for displaying the temperature measurements in order to locate a sealing defect of the secondary sealing membrane (7) in the form of a cold spot on the outer surface of the inner hull (2),

**characterized in that** the suction device comprises at least one suction means (80) consisting of a pump that draws at least some of the inert gas out of the secondary **space (6)** and reinjects it into the primary space (8), preferably via the aforesaid injection device (45).

11. The installation as claimed in claim 10, wherein the aforesaid suction means (80) forms the only suction means (80) of said device such that all of the inert gas recovered in the secondary space (6) is reinjected into the primary space (8).

12. The installation as claimed in claim 10, wherein the suction device also comprises at least one suction system (80') recovering the inert gas and not reinjecting it into the primary space (8).

13. The installation as claimed in claim 12, wherein the suction system (80') is a Venturi effect suction system (80') which comprises a main pipe (83) which has an inlet which is capable of being connected to a pressurized gas source (71), and an outlet toward the outer side of the tank (1), a suction pipe (81) having an upstream side which is capable of being connected to the outlet port of the secondary space (6) and a downstream side which opens laterally in a convergent/divergent section of the main pipe (83) so that a gas flow in the main pipe (83) produces a reduced pressure in the suction pipe (81).

14. The installation as claimed in claim 13, wherein the pressurized gas source (71) is a compressed air circuit.

15. The installation as claimed in any one of claims 10 to 14, wherein the injection device (45) comprises a compressor which is capable of injecting the inert gas from the inert gas reservoir (16) at a pressure between 3 and 8 bar.

16. A vessel (100) for transporting a liquefied gas at low temperature (30), the vessel comprising an installation for storing a liquefied gas at low temperature (30) as claimed in any one of claims 10 to 15.

[Fig.1]

[Fig.2]

EP 4 229 382 B1

FIG. 3

FIG. 4

FIG. 5

FIG. 6

18(IBS)

21

19, 20 ou 23(IS)

40

80'

71

40

80

40

FIG. 7

9

7

8

1

2

6

73

70

71

72

74

IV

80'

75

76

FIG. 8

81

82

80'

84

85

83

[Fig.9]

**EP 4 229 382 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020128370 A